# EUROPÄISCHE PATENTANMELDUNG

(11) **EP 1 233 238 A1**
(43) Veröffentlichungstag der Anmeldung: **21.08.2002**
(21) Anmeldenummer: 02003548.1
(22) Anmeldetag: 15.02.2002
(51) Int. Cl.: F24J 2/46

(54) **Rahmenprofil und Solarkollektor**

(30) Priorität: 16.02.2001 DE 20102770 U; 21.03.2001 DE 10113825
(71) Anmelder: Wolf GmbH, 84048 Mainburg (DE)
(72) Erfinder: Hillebrand, Werner, Dipl.-Ing., 85356 Freising (DE); Guntermann, Klaus, Dipl.-Ing., 85406 Zolling (DE)
(74) Vertreter: Popp, Eugen, Dr.

(57) **Zusammenfassung**

Rahmenprofil (201) zur Halterung einer Gehäuseplatte (205), insbesondere Kollektor-Glasplatte eines Solarkollektors (200), mit einem rechtwinklig zur Ebene der Gehäuseplatte verlaufenden ersten Profilabschnitt (201a), einem von diesem aus sich ins Innere eines Gehäuses, insbesondere Solarkollektors, erstrekkenden, im wesentlichen parallel zur Gehäuseplatte verlaufenden zweiten Profilabschnitt (201b) und einem im wesentlichen parallel zu dem ersten Profilabschnitt verlaufenden Verlängerungsabschnitt (201c), wobei zwischen dem ersten Profilabschnitt (201a) und dem Verlängerungsabschnitt ein unter den zweiten Profilabschnitt (201b) reichender und nach außerhalb des Gehäuses offener Hohlraum (213) ausgebildet oder der erste Profilabschnitt mit dem zweiten Profilabschnitt in dessen Mittenbereich verbunden ist derart, daß der erste Profilabschnitt im wesentlichen mit einer Kante der Gehäuseplatte ausgerichtet ist.

## Beschreibung

Die Erfindung betrifft ein Rahmenprofil zur Halterung einer im Gebrauch im wesentlichen waagerecht liegenden Gehäuseplatte nach dem Oberbegriff des Anspruchs 1, welches insbesondere für den Aufbau von Solarkollektoren vorgesehen ist. Sie betrifft weiter einen mit derartigen Rahmenprofilen aufgebauten Solarkollektor.

Im Kontext der verstärkten Bemühungen um die Nutzung regenerativer Energien haben der Bau und Betrieb von Solarkollektoren in den letzten Jahren erhebliche wirtschaftliche Bedeutung gewonnen. Es handelt sich hierbei nämlich um eine Möglichkeit der Nutzung der Sonnenenergie, die unter gewissen Voraussetzungen auch in höheren Breitengraden wirtschaftlich sinnvoll sein kann. Zudem erfordert die Realisierung einer kleineren bis mittelgroßen Heizungsanlage mit Solarkollektoren keinen allzu großen Investitionsaufwand und ist im Zusammenwirken mittelständischer Herstellerbetriebe und qualifizierter Installateure weitgehend mit den vorhandenen technischen Mitteln möglich.

Im Hinblick auf die relativ langen Amortisationszeiten ist es unabdingbar, Solarkollektoren konstruktiv auf einen zuverlässigen Langzeitbetrieb hin auszulegen. Dabei hat nach den vorliegenden Erfahrungen die zuverlässige Abdichtung gegen eindringende Feuchtigkeit einen besonderen Stellenwert, denn eindringende Feuchtigkeit kann ein Beschlagen des Kollektors zur Folge haben, was die Wirtschaftlichkeit des Betriebes in Frage stellen kann. Kritisch sind diesbezüglich insbesondere die Ecken des Kollektors, wo die Rahmenprofile normalerweise mit Gehrungen aneinanderstoßen und wobei nicht hinreichend sorgfältiger Verarbeitung Spalte sowohl zwischen den Profilteilen als auch zwischen den ihnen zugeordneten Abdichtmitteln vorhanden sein können.

Es sind daher verschiedene vorteilhafte Rahmenprofile und Abdichtungslösungen für Solarkollektoren vorgeschlagen worden.

So beschreibt die Druckschrift G 92 11 121.1 einen Solarkollektor mit einem Gehäuse, in dem ein Sonnenenergie-Absorber unter einer abgedichtet am Gehäuse abgestützten Glasscheibe angeordnet ist, wobei die Glasscheibe in einem Rahmen gehaltert und ein Dichtmittel zur Verankerung der Glasscheibe am Gehäuse und zum Abdichten des Überganges zwischen Glasscheibe und Gehäuse vorgesehen ist. Das Rahmenprofil hat eine Flüssigkeitssammelrinne, die im Kantenbereich der Glasscheibe unter dieser liegt und trotz der Abdichtung etwa in das Innere des Gehäuses eingedrungene Feuchtigkeit aufnimmt. Durch Bohrungen in der aufstehenden Profilwand im Bodenbereich der Flüssigkeitssammelrinne kann diese Flüssigkeit dann nach außerhalb des Gehäuses abgeführt werden.

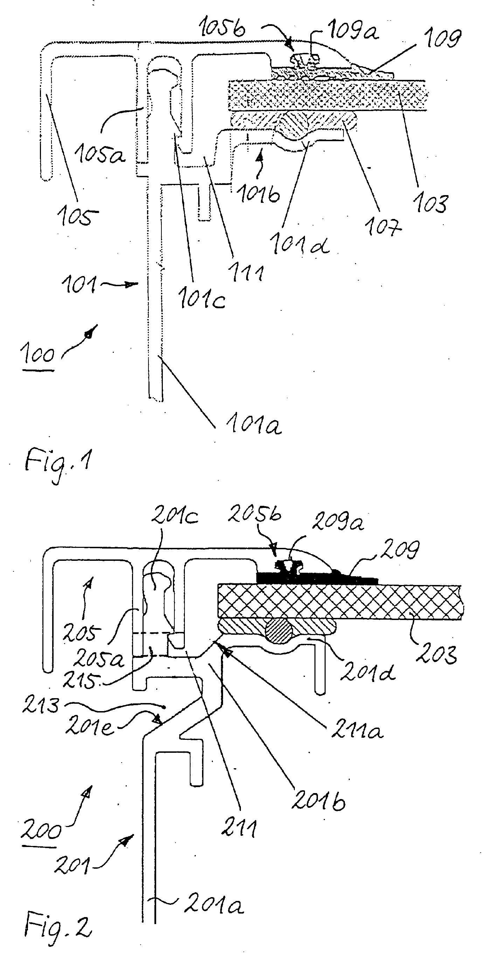

Eine der dort beschriebenen Rahmenausführung ähnliche, marktübliche Ausführung ist in Fig. 1 gezeigt und wird nachfolgend beschrieben.

Fig. 1 zeigt eine Querschnittsdarstellung des oberen Kantenbereiches eines Solarkollektors 100, der im wesentlichen aus einem Rahmenprofil 101, einer Kollektor-Glasplatte 103 und einer Glas-Abdeckleiste 105 aufgebaut ist. Zur Abdichtung zwischen dem Rahmenprofil 101 und der Kollektor-Glasplatte 103 ist zwischen diese ein dauerelastisches Dichtband 107 eingelegt, und zur Abdichtung zwischen Kollektor-Glasplatte 103 und Glas-Abdeckleiste 105 dient ein ebenfalls dauerelastisches, extrudiertes Dichtprofil 109.

Das Rahmenprofil 101 umfaßt einen ersten, auf der Ebene der Kollektor-Glasplatte 103 senkrecht stehenden Profilabschnitt 101a, einen zweiten, im rechten Winkel vom ersten Profilabschnitt 101a abgehenden und mit seinem größeren Teil sich parallel zur Ebene der Kollektor-Glasplatte 103 erstreckenden Profilabschnitt 101b sowie einen Verlängerungsabschnitt 101c des ersten Profilabschnitts, der sich vom Abzweigungspunkt des zweiten Profilabschnitts 101b hinaus in zur Kollektor-Glasplatte 103 senkrechter Richtung erstreckt. Der Verlängerungsabschnitt 101c hat gegenüber dem ersten Profilabschnitt 101a eine etwas größere Dicke und eine spezielle Profilierung. Diese dient - wie in Fig. 1 zu erkennen ist - dazu, im Zusammenwirken mit einem im wesentlichen U-förmigen Klammerabschnitt 105a an der Unterseite der Glas-Abdeckleiste 105 diese form- und reibschlüssig auf dem Rahmenprofil 101 zu fixieren. In einem zweiten, annähernd Ω-förmigen Klammerabschnitt 105b der Glas-Abdeckleiste 105 ist über einen im Querschnitt V-förmigen Fortsatz 109a an seiner Oberseite das Dichtprofil 109 fixiert.

Der zweite Profilabschnitt 101b hat, wie in Fig. 1 ebenfalls deutlich zu erkennen ist, einen abgestuften Verlauf mit einem gegenüber der Auflagefläche 101d für die Kollektor-Glasplatte 103 etwas abgesenkten Bereich, der an den Verlängerungsabschnitt 101c angrenzt. In diesem Bereich ist zwischen dem Verlängerungsabschnitt 101c und dem zweiten Profilabschnitt 101b eine Wassersammelrinne 111 mit annähernd rechteckigem Querschnitt ausgebildet. Diese steht über (hier nicht dargestellte) Öffnungen mit der Außenseite des Rahmenprofils 101 in Verbindung, die dafür sorgen, daß sich in der Wassersammelrinne 111 ansammelndes Wasser, welches durch Undichtigkeiten in den Kanten- bzw. Eckbereichen in den Raum zwischen dem Rahmenprofil 101 und der Glas-Abdeckleiste 105 eingedrungen ist, nach außerhalb des Rahmenprofils ablaufen kann.

Bei dem hier skizzierten Aufbau werden die zu einem Rahmen zusammengefügten Rahmenprofile in den Gehrungsbereichen abgedichtet. Ist die Abdichtung fehlerhaft, so kann jedoch Wasser aus der Wassersammelrinne 111 in den Gehrungsbereichen in den Kollektor gelangen.

In der Druckschrift DE 296 12 893 U1 wird ein weiteres Randverbundprofil für einen Sonnenkollektor beschrieben, welcher einen flächigen Absorber und eine parallel im Abstand darüber angeordnete durchsichtige Scheibe aufweist. Auch hier sind Abdichtmittel vorgesehen, und zwar in Form eines zwischen einem Absorber-Profilteil und einem parallel dazu angeordneten Scheiben-Profilteil sich erstreckenden, flexibel verformbaren Profilsteges. In einer bevorzugten Ausführungsform sind noch weitere Dichtmittel vorhanden. In einer weiteren bevorzugten Ausführung ist in dem Randprofil ein Hohlraum zur Unterbringung eines Trockenmittels vorgesehen. Dieses soll - insbesondere unter ungünstigen Betriebs- und Witterungsbedingungen - die Luftfeuchtigkeit weitgehend aus dem Kollektorinneren entfernen und damit ein Beschlagen der Scheibe verhindern.

In der DE 197 19 171 A1 wird ein Sonnenkollektor beschrieben, der im wesentlichen aus einer Blechwanne und einer auf dieser aufliegenden strahlungsdurchlässigen Scheibe sowie verschiedenen Dichtmitteln zum Abdichten des Übergangsbereiches zwischen Wanne und Scheibe aufgebaut ist. Möglichkeiten zur Unschädlichmachung einmal eingedrungener Feuchtigkeit werden in dieser Druckschrift nicht aufgezeigt.

In der DE 196 52 568 A1 wird ein Sollarkollektor mit geteiltem Rahmen, welcher einen Teil des Kollektorgehäuses bildet, und einer transparenten Abdeckung beschrieben. Die Abdeckung (beispielsweise Glasscheibe) liegt auf einem waagerechten Abschnitt des oberen Rahmenteils auf und ist dort abgedichtet, wobei in einer speziellen Ausführung noch eine Abdeckung des Kantenbereiches vorgesehen ist. Das obere Rahmenteil selbst hat an seiner Unterseite einen U-Profilabschnitt, der zur Verbindung der Teile miteinander auf das untere Rahmenteil aufgesteckt wird. Mittel zur Eliminierung eingedrungener Feuchtigkeit sind auch hier nicht beschrieben.

Der Erfindung liegt die Aufgabe zugrunde, ein verbessertes Rahmenprofil der gattungsgemäßen Art bereitzustellen, welches eine schnelle und zuverlässige Ableitung von in das Gehäuseinnere eingedrungener Feuchtigkeit gewährleistet und insbesondere für einen Solarkollektor geeignet ist. Weiterhin liegt der Erfindung die Aufgabe der Bereitstellung eines Solarkollektors -zugrunde, aus dem einmal eingedrungene Feuchtigkeit schnell und zuverlässig abgeleitet werden kann.

Diese Aufgabe wird hinsichtlich ihres ersten Vorrichtungsaspektes durch ein Rahmenprofil mit den Merkmalen des Anspruchs 1 und hinsichtlich ihres zweiten Vorrichtungsaspektes durch einen Solarkollektor mit den Merkmalen des Anspruchs 4 gelöst.

Die Erfindung schließt den grundlegenden Gedanken ein, ein in einfacher und kostengünstiger Weise einteilig gefertigtes Rahmeprofil so zu formen, daß in das Innere eines mit dem Rahmenprofil gebildeten Gehäuses eingedrungene Feuchtigkeit aus einem Feuchtigkeitssammelbereich auf direktem Wege nach außen abgeleitet wird.

Sie schließt in einer ersten Variante weiter den Gedanken ein, zu diesem Zweck in dem Profilteil zwischen einem aufstehenden unteren Abschnitt (der das Gehäuse seitlich begrenzt) und einem aufstehenden oberen Abschnitt (auf den insbesondere eine Abdeckleiste aufgesteckt wird) einen nach außerhalb des Profils offenen Ablaufbereich vorzusehen. Dieser liegt direkt unterhalb des Feuchtigkeitssammelbereiches, so daß aus diesem in den Gehrungsbereich nach unten durchsickende Flüssigkeit gar nicht in das Kollektorinnere gelangt, sondern an der Profilaußenseite abläuft.

In einer zweiten Variante ist der aufstehende erste Profilabschnitt des Profilteiles nach innen versetzt, so daß die Verbindungskante zwischen ihm und dem im wesentlichen waagerecht verlaufenden zweiten Profilabschnitt etwa in der Mitte dieses zweiten Profilabschnittes liegt. Auch bei dieser Variante kann auf dem zweiten Profilabschnitt angesammelte Feuchtigkeit bei einer Undichtigkeit in den Gehrungsbereichen des Kollektors ohne weiteres nach außerhalb ablaufen.

In einer bevorzugten Ausführung hat der bei der ersten Variante außenseitig am Profil vorgesehene Hohlraum einen im wesentlichen dreieckigen oder trapezförmigen Querschnitt mit einer Schräge, die sich vom oberen Ende des ersten Profilabschnittes aus zu einem mittleren Abschnitt des zweiten Profilabschnittes erstreckt. Über diese Schräge kann die aus dem Gehäuseinneren ausgetretene Flüssigkeit besonders leicht ablaufen. Im übrigen bietet der schräg verlaufende Verbindungsabschnitt zwischen dem ersten und zweiten Profilabschnitt eine statisch vorteilhaft angeordnete Stütze für den letzteren, erhöht also insgesamt die mechanische Stabilität des Rahmenprofils. Analog wirkt übrigens die in der zweiten Variante vorgesehene Versetzung des aufstehenden ersten Profilabschnitts vom Außenrand des zweiten Profilabschnitts vom Außenrand des zweiten Profilabschnitts in dessen zentralen Bereich. Auch hierdurch wird nämlich das Profil insgesamt (in Art eines T-Trägers) mechanisch stabiler.

In einer weiteren vorteilhaften Ausführung hat auch der zweite Profilabschnitt - und zwar in seinem an den ersten Profilabschnitt bzw. dessen Verlängerungsabschnitt angrenzenden Bereich - eine Ablaufschräge, die einen abgesenkten Bereich des zweiten Profilabschnittes zur aufliegenden Abdeckplatte bzw. Kollektor-Glasplatte hin begrenzt. Diese Gestaltung fördert das Ablaufen von - insbesondere in nicht sauber gearbeiteten und/oder nicht sauber abgedichteten Gehrungsbereichen - in den Kantenbereich der Abdeckplatte eingedrungenen Wassers. Der Flüssigkeitssammelbereich bzw. die Wasserrinne an der Kante der Abdeckplatte (Kollektor-Glasplatte) hat mit dieser Schräge insgesamt eine Trogform.

Das Rahmenprofil ist bevorzugt als kostengünstig herstellbares Strangpreßprofil oder auch als Tiefziehteil aus Leichtmetall, insbesondere Aluminium oder einer Aluminiumlegierung, gefertigt. In einer anderen Ausführung besteht es aus einem, insbesondere faserverstärkten, Kunststoff, beispielsweise PVC oder Polyamid.

Ein mit dem vorgeschlagenen Rahmenprofil gefertigter Solarkollektor weist neben den rahmenförmig (insbesondere in Form eines Rechtecks) zusammengefügten Rahmenprofilen die erwähnte Kollektor-Glasplatte bzw. eine Abdeckplatte aus einem anderen, für Sonnenlicht transparenten und hinreichend witterungsbeständigen Material sowie jeweils auf ein Rahmenprofil aufgesteckte Abdeckleisten auf. Die Abdeckplatte ist über ein Dichtband jeweils auf die zweiten Profilabschnitte der Rahmenprofil dicht aufgelegt. Hierbei wird zum seitlich begrenzenden Verlängerungsabschnitt des ersten Profilabschnittes ein Spalt belassen, der zum einen zum Ausgleich der unterschiedlichen thermischen Ausdehnung von Rahmen und Abdeckplatte dient und in dessen unterem Abschnitt sich zum anderen die erwähnte Wassersammelrinne befindet. Dieser Spaltbereich wird nach oben durch die Abdeckleisten abgedeckt, wobei auch zwischen der Oberseite der Abdeckplatte und der Unterseite der Abdeckleisten Abdichtmittel vorgesehen sind.

In einer bevorzugten Ausführung ist die Abdeckplatte so bemessen und auf die zweiten Profilabschnitt aufgelegt, daß ihre Kanten im wesentlichen mit dem Übergang des waagerechten Bereiches des jeweiligen zweiten Profilabschnittes in die zweite Schräge ausgerichtet sind.

Die Abdeckleisten sind bevorzugt aus Alu-Strangprofil gefertigt. Sie weisen jeweils - in an sich bekannter Weise - auf der Unterseite einen U-förmig profilierten Befestigungsabschnitt auf, in den beim Aufstecken der Verlängerungsabschnitt des ersten Profilabschnitts eingreift. Der letztere hat zum Ausgleich von Toleranzen und zur Gewährleistung eines zuverlässigen Halts bevorzugt eine profilierte Kontur, die eine gewisse Formelastizität schafft.

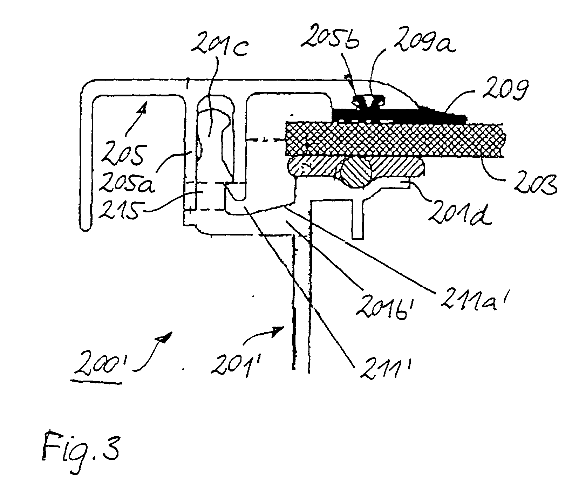

Vorteile und Zweckmäßigkeiten der Erfindung ergeben sich im übrigen aus der nachfolgenden Beschreibung bevorzugter Ausführungsbeispiele anhand von Fig. 2 und 3.

Fig. 2 zeigt einen oberen Kantenbereich eines Solarkollektors 200, der in vielen Teilen dem in Fig. 1 dargestellten und weiter oben beschriebenen Kollektoraufbau entspricht. Einander entsprechende bzw. gleichwirkende Teile sind daher in Fig. 2 mit zu Fig. 1 korrespondierenden Bezugsziffern bezeichnet und werden hier nicht nochmals näher erläutert. Insbesondere gleichen die Kollektor-Glasplatte 203, die Glas-Abdeckleiste 205, das Dichtband 207 und das Dichtprofil 209 völlig den entsprechenden Teilen beim bekannten Aufbau aus Fig. 1.

Hiervon abweichend ist also lediglich die Gestaltung des Rahmenprofils 201. Auch dieses hat indes einen ersten, rechtwinklig zur Ebene der Kollektor-Glasplatte 203 orientierten Profilabschnitt 201a und einen mit diesem ausgerichteten Verlängerungsabschnitt 201c zum Eingriff mit dem ersten Klammerabschnitt 205a der Glas-Abdeckleiste 205. Die Gestalt des letzteren entspricht ebenfalls der Ausführung nach Fig. 1.

Der zweite Profilabschnitt 201b entspringt hier jedoch über eine Schräge aus dem ersten Profilabschnitt 201a und zusätzlich rechtwinklig aus dem unteren Kantenbereich des Verlängerungsabschnittes 201c - der hier keine unmittelbare Fortsetzung des ersten Profilabschnitts 201a darstellt. Vielmehr endet der erste Profilabschnitt 201a am Ursprungspunkt der Schräge 201e, und oberhalb ist ein im Querschnitt trapezförmiger, zur Außenseite des Rahmenprofils 201 hin offener Hohlraum bzw. Profilkanal 213 gebildet. Dieser ist an seiner Oberseite, also in dem dem Verlängerungsabschnitt 201c benachbarten Bereich des zweiten Profilabschnitts 201b, über Ablauföffnungen 215 nach außerhalb des Profils entwässert.

Eine weitere Abweichung gegenüber der bekannten Konstruktion besteht im Vorsehen einer weiteren Schräge 211a auf der Oberseite des zweiten Profilabschnitts 201b, wobei diese Schräge die Auflagefläche 201d mit dem Boden der Wassersammelrinne 211 verbindet.

Durch die beiden Schrägen 201e und 211a wird bei Undichtigkeiten im Gehrungsbereich ein leichtes und schnelles Ablaufen von auf der Oberseite oder im Kantenbereich der Kollektor-Glasplatte 203 eingedrungener Feuchtigkeit zunächst in die Wassersammelrinne 211 und von dort über den Profilkanal 213 nach außerhalb des Kollektor-Gehäuses erreicht. Damit wird ein Eindringen von Feuchtigkeit in das Innere des Sollarkollektors (mit den oben beschriebenen nachteiligen Folgen) zuverlässig verhindert.

Ein in Fig. 3 in einer (zu Fig. 1 und 2 analogen) Ausschnittdarstellung skizzierter Solarkollektor 200' ist wiederum teilweise mit dem Solarkollektor 200 nach Fig. 2 identisch, so daß für übereinstimmende Teile identische und für einander funktionell entsprechende Teile an Fig. 2 angelehnte Bezugsziffern verwendet werden. Übereinstimmende Teile werden hier nicht nochmals beschrieben.

Der wesentlichste Unterschied besteht darin, daß das Rahmenprofil 201' des Solarkollektors 200' einen anders geformten und angeordneten ersten Profilabschnitt 201a' und einen geringfügig anders geformten zweiten Profilabschnitt 201b' hat. Der erste Profilabschnitt 201a' ist hier einfach als vertikaler Wandungsabschnitt ausgebildet, der annähernd in der Mitte des zweiten Profilabschnitts 201b' in diesen einmündet. Die Gestalt des zweiten Profilabschnitts 201b' ist zudem dahingehend modifiziert, daß durch eine veränderte Anordnung und Neige der Schräge 211a' die Wassersammelrinne 211' eine etwas andere Form hat. Schließlich ist der (in beiden Figuren 2 und 3 nicht gesondert bezeichnete) "hängende" Profilfortsatz unterhalb des Dichtbandes 207 bei der Ausführung nach Fig. 3 etwas zur Mitte des zweiten Profilabschnitts und damit zum aufstehenden ersten Profilabschnitt 201a' hin versetzt.

Die Ausführung der Erfindung ist nicht auf diese Beispiele beschränkt, sondern ebenso in einer Reihe von Abwandlungen möglich, die im Rahmen fachmännischen Handelns liegen.

### Bezugszeichenliste

- 100; 200; 200': Solarkollektor
- 101; 201; 201': Rahmenprofil
- 101a; 201a; 201a': erster Profilabschnitt
- 101b; 201b; 201b': zweiter Profilabschnitt
- 101c; 201c: Verlängerungsabschnitt
- 101d; 201d: Auflagefläche
- 103; 203: Kollektor-Glasplatte
- 105; 205: Glas-Abdeckleiste
- 105a; 205a: erster Klammerabschnitt
- 105b; 205b: zweiter Klammerabschnitt
- 107; 207: Dichtband
- 109; 209: Dichtprofil
- 109a; 209a: V-förmiger Fortsatz
- 111; 211; 211': Wassersammelrinne
- 201e, 211a; 211a': Schräge
- 213: Profilkanal
- 215: Ablauföffnung

## Patentansprüche

1. Rahmenprofil (201; 201') zur Halterung einer Gehäuseplatte (205), insbesondere Kollektor-Glasplatte eines Solarkollektors (200; 200'), mit einem rechtwinklig zur Ebene der Gehäuseplatte verlaufenden ersten Profilabschnitt (201a; 201a'), einem von diesem aus sich ins Innere eines Gehäuses, insbesondere Solarkollektors, erstreckenden, im wesentlichen parallel zur Gehäuseplatte verlaufenden zweiten Profilabschnitt (201b; 201b') und einem im wesentlichen parallel zu dem ersten Profilabschnitt verlaufenden Verlängerungsabschnitt (201c),
**dadurch gekennzeichnet, daß**
zwischen dem ersten Profilabschnitt (201a) und dem Verlängerungsabschnitt ein unter den zweiten Profilabschnitt (201b) reichender und nach außerhalb des Gehäuses offener Hohlraum (213) ausgebildet oder der erste Profilabschnitt (201a') mit dem zweiten Profilabschnitt (201b') in dessen Mittenbereich verbunden ist derart, daß der erste Profilabschnitt im wesentlichen mit einer Kante der Gehäuseplatte ausgerichtet ist.

2. Rahmenprofil nach Anspruch 1,
**dadurch gekennzeichnet, daß**
der Hohlraum (213) einen im wesentlichen dreieckigen oder trapezförmigen Querschnitt hat, wobei sich eine erste Schräge (201e) vom oberen Ende des ersten Profilabschnitts (201a) zur Unterseite eines mittleren Bereiches des zweiten Profilabschnitts (201b) erstreckt.

3. Rahmenprofil nach Anspruch 1 oder 2,
**dadurch gekennzeichnet, daß**
der an den ersten Profilabschnitt (201a; 201a') angrenzende Bereich des zweiten Profilabschnittes (201b; 201b') zur Bildung einer Wassersammelrinne (211; 211') abgesenkt ist, wobei zwischen der Wassersammelrinne und dem vom ersten Profilabschnitt Auflagebereich (201d) des zweiten Profilabschnittes eine zweite Schräge (211a; 211a') ausgebildet ist.

4. Rahmenprofil nach einem der vorangehenden Ansprüche,
**gekennzeichnet durch**
die Ausführung als Leichtmetall-Strangpreß- oder -Tiefziehteil oder faserverstärktes Kunststoffteil.

5. Solarkollektor (200; 200') mit mehreren, insbesondere vier, rahmenförmig zusammengefügten Rahmenprofilen (201; 201') nach einem der Ansprüche 1 bis 4, einer über ein Dichtband (207) auf den zweiten Profilabschnitten der Rahmenprofile aufliegenden Kollektor-Glasplatte (203) und mehreren, jeweils auf die Rahmenprofile aufgesteckten Abdeckleisten (205).

6. Solarkollektor nach Anspruch 5,
**dadurch gekennzeichnet, daß**
die Kollektor-Glasplatte (203) derart bemessen und auf die zweiten Profilabschnitte (201b; 201b') der Rahmenprofile (201) aufgelegt ist, daß ihre Kanten im wesentlichen mit dem Übergang der zweiten Schräge (211a; 211a') in den Auflagebereich (201d) des zweiten Profilabschnitts ausgerichtet sind.

7. Solarkollektor nach Anspruch 5 oder 6,
**dadurch gekennzeichnet, daß**
die Abdeckleisten (205) jeweils einen auf der Unterseite U-förmig profilierten Abschnitt (205a) aufweisen, in den der aufstehende Verlängerungsabschnitt (201c) des jeweils zugeordneten Rahmenprofils (201; 201') eingreift.

8. Solarkollektor nach einem der Ansprüche 5 bis 7,
**dadurch gekennzeichnet, daß**
die Abdeckleisten (205) aus einem Alu-Strangpreßprofil bestehen und zwischen ihrer Unterseite und der Oberseite der Kollektor-Glasplatte (205) ein dauerelastisches Dichtprofil (209) angeordnet ist.
